(19) **Europäisches Patentamt**

**European Patent Office**

**Office européen des brevets**

(11) Veröffentlichungsnummer: **0 405 175 A1**

## (12) EUROPÄISCHE PATENTANMELDUNG

(21) Anmeldenummer: **90110407.5**

(22) Anmeldetag: **01.06.90**

(30) Priorität: **29.06.89 CH 2415/89**

(43) Veröffentlichungstag der Anmeldung:
**02.01.91 Patentblatt 91/01**

(84) Benannte Vertragsstaaten:
**BE CH DE ES FR GB IT LI NL SE**

(51) Int. Cl.⁵: **B23B 27/16, B23F 21/00**

(71) Anmelder: **Werkzeugmaschinenfabrik
Oerlikon-Bührle AG
Birchstrasse 155
CH-8050 Zürich(CH)**

(72) Erfinder: **Guinand, Pierre
Eichhalsstrasse 8
CH-8706 Feldmeilen(CH)**

(54) Werkzeug zum zerspanenden Bearbeiten von Werkstücken.

㊤ Zum Schneiden von Werkstücken aus Hartmetall wird eine Schneideplatte (11) verwendet, die aus einer Hartmetallunterlage (12) und einer aufgesinterten Auflageschicht (13) besteht. Für die Auflageschicht (13) wird ein kubisches Bornitrid verwendet. Das Befestigen einer solchen Schneideplatte (11) an einem Messerschaft (10) bereitet Schwierigkeiten. Beim Auflöten oder beim Aufschweissen der Schneideplatte (11) auf den Messerschaft (10) besteht die Gefahr, dass sich durch die Erwärmung der Auflageschicht (13) ihre Struktur verändert, oder dass durch Wärmespannung Risse entstehen. Um dies zu vermeiden, kann die Schneideplatte (11) am Messerschaft (10) angeschraubt werden. Am Messerschaft (10) ist ein Schlitz vorhanden, indem sich die Schneideplatte (11) befindet und mit Befestigungsschrauben (15) zwischen den Seitenwänden (29) des Schlitzes (14) festgeklemmt ist.

FIG. 4

EP 0 405 175 A1

## WERKZEUG ZUM ZERSPANENDEN BEARBEITEN VON WERKSTÜCKEN

Die Erfindung betrifft ein Werkzeug zum zerspanenden Bearbeiten von Werkstücken, enthaltend: einen Messerschaft und eine Schneideplatte, die sich in einer Aussparung des Messerschaftes befindet, mit einer Schraube zum Verschieben der Schneideplatte in der Aussparung des Messerschaftes und mit Organen zum Befestigen der Schneideplatte am Messerschaft.

Bei einem bekannten Werkzeug dieser Art (siehe DE-C-32 11 727) ist ein Schaft an seinem einen Ende als Schneidplattenhalter mit zwei Plattensitzen ausgebildet. In die beiden Plattensitze ist je eine Schneideplatte eingelötet. Jede der beiden Schneideplatten besteht aus einer Unterlage von etwa 4 - 6 Millimetern Dicke und einer auf diese aufgesinterten Auflageschicht von etwa 0,8 - 1,0 Millimetern Dicke. Die Unterlage besteht aus Hartmetall, wie Wolfram-Carbid, die Auflageschicht aus kubischem Bornitrid (CBN).

Beim Auflöten oder Aufschweissen der Schneideplatte auf den Messerschaft oder den Schneidplattenhalter besteht die Gefahr, dass sich durch die Erwärmung der Auflageschicht ihre Struktur verändert, oder dass durch Wärmespannung Risse entstehen.

Bei einem anderen bekannten Werkzeug dieser Art (siehe FR-A-1 254 498) wird eine Schneideplatte aus Carbid, Keramik oder Schnelldrehstahl verwendet. Am vorderen Ende eines Messerschaftes oder eines Schneidplattenhalters ist eine Aussparung vorhanden, in welche die Schneideplatte leicht verschiebbar eingelegt ist. Die Schneideplatte wird durch eine Blattfeder in der Aussparung des Messerschaftes gehalten. Eine Schneidekante der Schneideplatte ist parallel zum Grund der Aussparung des Messerschaftes angeordnet. Dieses bekannte Werkzeug soll durch eine federnde Befestigung der Schneideplatte am Messerschaft einen Bruch des Werkzeuges bei unerwünschten Stössen des Schneidevorganges verhindern.

Die Aufgabe, welche mit der vorliegenden Erfindung gelöst werden soll, besteht in der Schaffung eines Werkzeuges, bei dem die Schneideplatte einerseits möglichst leicht auswechselbar am Messerschaft befestigt ist und andererseits eine möglichst starre Befestigung der Schneideplatte am Messerschaft gewährleistet ist.

Das Werkzeug, mit dem diese Aufgabe gelöst ist, ist dadurch gekennzeichnet, dass die Aussparung als ein Schlitz ausgebildet ist, der durch zwei Seitenflächen und eine Grundfläche gebildet wird, dass eine Schneidekante der Schneideplatte annähernd parallel zu den beiden Seitenflächen des Schlitzes angeordnet ist, und dass die Schneideplatte mit Hilfe von Befestigungsschrauben zwischen den beiden Seitenflächen des Schlitzes festgeklemmt ist, indem die Seitenflächen elastisch gegen die Schneideplatte gepresst werden.

Der Vorteil dieser Befestigung der Schneideplatte am Messerschaft besteht im wesentlichen darin, dass trotz leichter Auswechselbarkeit der Schneideplatte eine starre Befestigung gewährleistet ist, und das Nachschleifen der Schneidekante wesentlich erleichtert ist.

Ein Ausführungsbeispiel des erfindungsgemässen Messers für einen Messerkopf einer Verzahnungsmaschine, insbesondere zum Verzahnen von Kegelrädern ist im folgenden anhand der beigefügten Zeichnung ausführlich beschrieben. Es zeigt:

Fig.1 und 2 perspektivische Darstellungen eines Messerschaftes und einer Schneideplatte;

Fig.3 bis 5 Ansichten des Messerschaftes von vorne, von der Seite und von oben;

Fig.6 bis 9 Ansichten der Schneideplatte von hinten, von der Seite, von oben und von vorne.

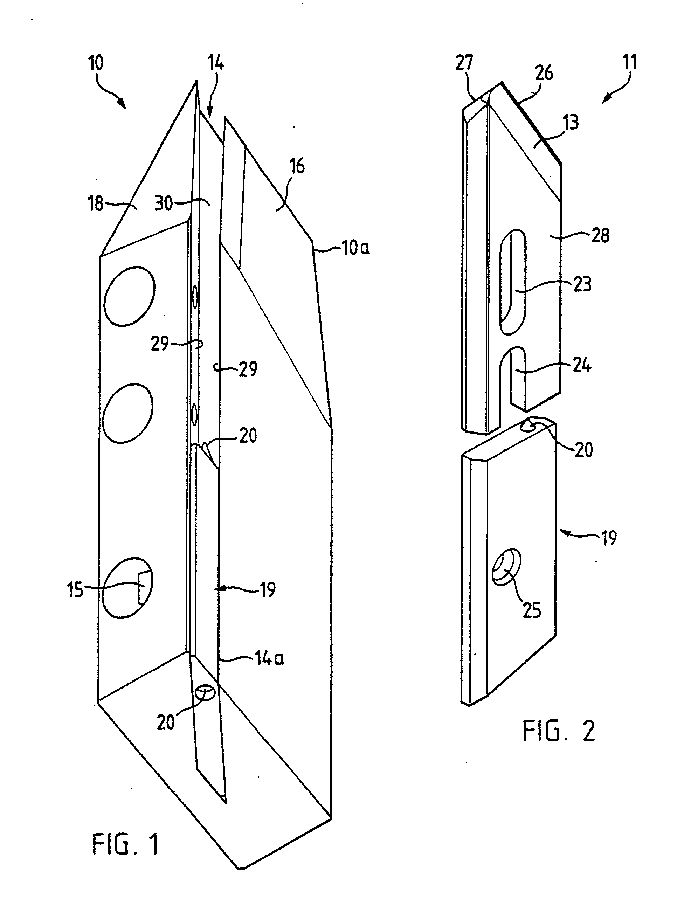

Gemäss Fig.1 und 2 enthält das erfindungsgemässe Messer 9 folgende Teile:

a) einen Messerschaft 10, der auch als Schneideplattenhalter bezeichnet wird und

b) eine Schneideplatte 11, die in einen Schlitz 14 des Messerschaftes 10 eingesetzt werden kann. Diese Schneideplatte 11 ist aus folgenden Teilen zusammengesetzt:

$b_1$) einer Grundplatte 28,

$b_2$) einem Hartmetallträger 12, der auf diese Grundplatte 28 der Schneideplatte 11 aufgelötet ist,

$b_3$) einer Schicht 13 aus kubischem Bornitrid, welche auf dem Hartmetallträger 12 aufgesintert ist.

Der Hartmetallträger 12 mit der aufgesinterten Schicht 13 ist ein im Handel erhältlicher Kaufteil, der sich besonders zum Schneiden von gehärteten Zahnrädern eignet.

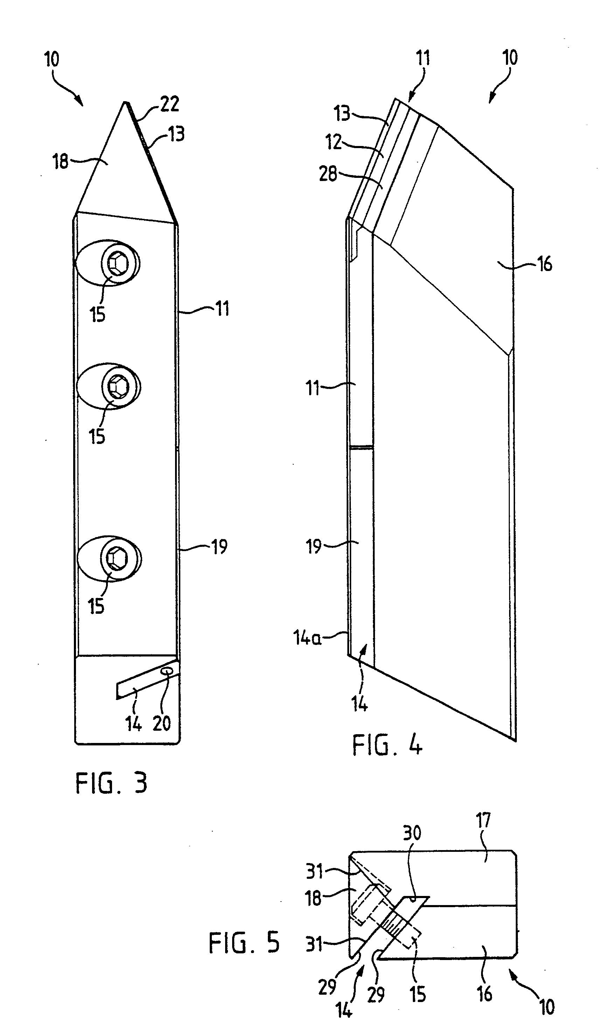

Die in den Schlitz 14 des Messerschaftes eingesetzte Schneideplatte 11 wird durch Schrauben 15 festgeklemmt. Der Messerschaft weist gemäss Fig.5 an seinem vorderen oder oberen Ende drei Flächen 16, 17 und 18 auf, wobei die Flächen 16 und 18 einerseits und die Flächen 17 und 18 andererseits miteinander je eine Kante 31 bilden. Gemäss Fig.1 befindet sich zwischen Fläche 18 und Fläche 16 der erwähnte Schlitz 14 zur Aufnahme der Schneideplatte 11. Dieser Schlitz 14 erstreckt sich über die ganze Länge des Messerschaftes 10. Im unteren Teil 14a dieses Schlitzes 14 befindet sich eine Anschlagplatte 19, die genau wie die Schneideplatte 11, im Schlitz 14 mit Hilfe der Schrauben 15 festgeklemmt ist. In dieser Anschlagplatte 19 befindet sich eine weitere Schraube 20, von der nur das hintere Ende sichtbar ist, und auf deren vorderes Ende sich die Schneideplatte 11 abstützt. Diese Schraube 20 dient dazu, die Schneideplatte 11 im Schlitz 14 in Längsrichtung des Messerschaftes zu verschieben.

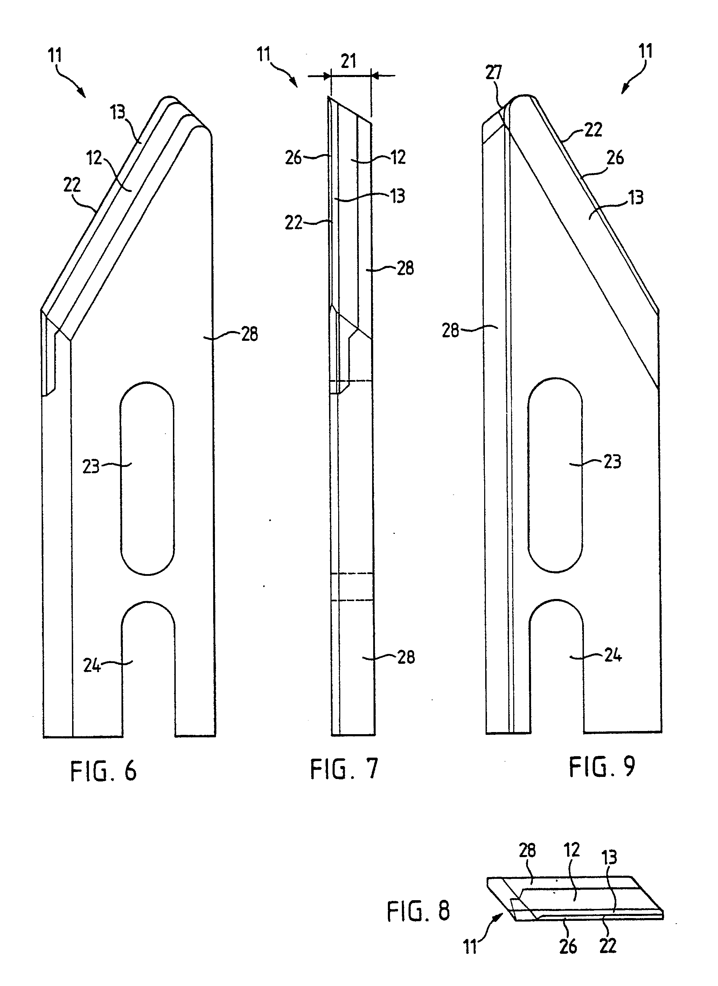

Gemäss Fig.2 und 9 weist die Schneideplatte 11 eine Flankenfreifläche 21 und eine Spanfläche 26 auf, sowie eine Kopffreifläche 27. Durch die Spanfläche 26 und die Flankenfreifläche 21 wird eine Schneidekante 22 gebildet. Die Schneideplatte 11 besitzt nur diese eine Schneidekante 22. Das Messer 9 kann daher nur als Innenschneider oder als Aussenschneider verwendet werden. Die Schneidekante 22 ist parallel zu den beiden Seitenflächen 29 des Schlitzes 14 angeordnet, wie am besten aus Fig.5 ersichtlich ist. Die Schneideplatte 11 liegt also mit ihrer vorderen und hinteren Seite an den Seitenflächen 29 des Schlitzes 14 an. Die Schneideplatte 11 ist mit zwei Langlöchern 23 und 24 versehen, von denen sich das Langloch 24 bis ans Ende der Schneideplatte 11 erstrecken kann und somit nur einen Schlitz bildet. Die entsprechenden Schrauben 15 ragen durch die Langlöcher 23 und 24 hindurch. Auch die Anschlagplatte 19 weist ein Loch 25 auf, durch welche ebenfalls eine Schraube 15 hindurchragt.

Die Schneideplatte 11 wird nur an der Flankenfreifläche 21 und an der Spanfläche 26 geschliffen. Die beschriebene Ausbildung des Messers 9 ermöglicht es - wie üblich - einen positiven oder negativen Spanwinkel von z.B. +7° bis -7° sowie einen Flankenfreiwinkel von ebenfalls ca. 7° zu bilden.

Die beschriebene Befestigung der Schneideplatte 11 am Messerschaft 10 hat folgende Vorteile:
    a) das Nachschleifen wird vereinfacht,
    b) die Lebensdauer der Werkzeuge wird erhöht.

Bezugsziffernliste

    09 Messer
    10 Messerschaft
    11 Schneideplatte
    12 Hartmetallträger
    13 Auflageschicht
    14 Schlitz
    15 Schrauben
    16 Fläche
    17 Fläche
    18 Fläche
    19 Anschlagplatte
    20 Schraube
    21 Flankenfreifläche
    22 Schneidekante
    23 Langloch
    24 Langloch
    25 Langloch

    26 Spanfläche
    27 Kopffreifläche
    28 Grundplatte
    29 Seitenfläche
    30 Grundfläche
    31 Schnittlinie

## Ansprüche

1. Werkzeug zur zerspanenden Bearbeitung von Werkstücken, enthaltend: einen Messerschaft (10) und eine Schneideplatte (11), die sich in einer Aussparung (14) des Messerschaftes (10) befindet, mit einer Schraube (20) zum Verschieben der Schneideplatte (11) in der Aussparung (14) des Messerschaftes (10), und mit Organen (15) zum Befestigen der Schneideplatte (11) am Messerschaft (10), dadurch gekennzeichnet, dass die Aussparung als ein Schlitz (14) ausgebildet ist, der durch zwei Seitenflächen (29) und eine Grundfläche (30) gebildet wird, dass eine Schneidekante (22) der Schneideplatte (11) annähernd parallel zu den beiden Seitenflächen (29) des Schlitzes (14) angeordnet ist, und dass die Schneideplatte (11) mit Hilfe von Befestigungsschrauben (15) zwischen den beiden Seitenflächen (29) des Schlitzes (14) festgeklemmt ist, indem die Seitenflächen (29) elastisch gegen die Schneideplatte (11) gepresst werden.

2. Werkzeug nach Anspruch 1, dadurch gekennzeichnet, dass im Schlitz (14) des Messerschaftes (10) ausser der Schneideplatte (11) noch eine Anschlagplatte (19) festgeklemmt ist, in der sich die Schraube (20) zum Verschieben der Schneideplatte (11) befindet.

3. Werkzeug nach Anspruch 1, dadurch gekennzeichnet, dass der Messerschaft (10) an seinem vorderen Ende drei Flächen (16,17,18) aufweist, die zwei Schnittlinien (31) bilden und dass der Schlitz (14) parallel zu einer dieser Schnittlinien (31) angeordnet ist.

FIG. 1

FIG. 2

FIG. 3

FIG. 4

FIG. 5

FIG. 6

FIG. 7

FIG. 9

FIG. 8

# EUROPÄISCHER RECHERCHENBERICHT

**Europäisches Patentamt**

Nummer der Anmeldung

EP 90 11 0407

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C- 314 928 (H. JOOST)(05-09-1919) <br> * Seite 1, Zeilen 47-62; Figuren 1,2 * | 1 | B 23 B 27/16 <br> B 23 F 21/00 |
| A | | 2,3 | |
| X | DE-B-1 093 650 (K. HERTEL)(24-11-1960) <br> * Anspruch 1; Figuren 1-6 * | 1 | |
| A | | 2,3 | |
| A | EP-A-0 037 693 (GENERAL ELECTRIC CO.)(14-10-1981) <br> * Zusammenfassung; Figur 1 * | 1,2 | |
| A | US-E- 22 891 (E.C. HEAD)(24-06-1947) <br> * Spalte 2, Zeilen 53-55; Spalte 3, Zeilen 1-2; Figur 3 * | 1 | |
| A | SU-A- 806 304 (METAL CUT MACH. TOOL)(23-02-1981) <br> * Spalte 3, Zeile 1; Figur 1 * | 1 | |
| A | GB-A- 537 399 (CRAVEN BROTHERS LTD)(19-06-1941) <br> * Seite 3, Zeilen 15-18,43-46; Figuren 1,2 * | 1 | RECHERCHIERTE SACHGEBIETE (Int. Cl.5) <br><br> B 23 F <br> B 23 B <br> B 23 C <br> B 27 G <br> B 27 L |
| D,A | FR-A-1 254 498 (R. GRANDADAM)(24-02-1961) | | |
| D,A | GB-A-2 114 033 (MAAG GEAR-WHEEL AND MACHINE CO., LTD)(17-08-1983) | | |

Der vorliegende Recherchenbericht wurde für alle Patentansprüche erstellt

| Recherchenort | Abschlußdatum der Recherche | Prüfer |
|---|---|---|
| DEN HAAG | 08-10-1990 | MOET H.J.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)